Europäisches Patentamt

European Patent Office

Office européen des brevets

(19)

(11) Numéro de publication: **0 403 364**
**A2**

(12) **DEMANDE DE BREVET EUROPEEN**

(21) Numéro de dépôt: **90401614.4**

(22) Date de dépôt: **12.06.90**

(51) Int. Cl.5: **H04L 12/42**

(30) Priorité: **13.06.89 FR 8907778**

(43) Date de publication de la demande:
**19.12.90 Bulletin 90/51**

(84) Etats contractants désignés:
**DE ES GB IT SE**

(71) Demandeur: **TELEMECANIQUE**
**43-45, Boulevard Franklin Roosevelt**
**F-92500 Rueil Malmaison(FR)**

(72) Inventeur: **Grave, Jean-Marie**
**25, rue du Belvedère**
**F-78750 Mareil Marly(FR)**

(74) Mandataire: **Martin, Jean-Jacques et al**
**Cabinet REGIMBEAU 26, Avenue Kléber**
**F-75116 Paris(FR)**

(54) **Procédé d'échange de données entre une station centrale et des stations locales et dispositif de transfert bidirectionnel de données pour la mise en oeuvre du procédé.**

(57) L'invention concerne un procédé de transfert de données entre une station centrale (SC) et des stations locales ($SL_K$), prévues en succession sur une ligne en boucle ($m_0$-$m_{P-1}$), dans lequel
- la station centrale émet sur la ligne une première sous-trame ($S_0$) incluant un ensemble ordonné de données destinées aux stations locales, et
- chaque station locale ($SL_K$) recevant une sous-trame ($S_K$) en extrait de la trame la donnée qui lui est destinée, lui substitue une autre donnée ($\varepsilon i$) destinée à la station centrale, et réémet la nouvelle sous-trame ($S_{K+1}$) vers la station suivante ($SL_{K+1}$),
- la dernière station locale ($SL_{P-1}$) réémettant ainsi vers la station centrale une dernière sous-trame ($S_P$) incluant un ensemble ordonné de données provenant desdites stations locales.

L'invention concerne également un dispositif d'échange de données, par lequel une paire blindée ordinaire permet d'assurer une liaison bidirectionnelle en full-duplex entre les stations, notamment de manière à éviter de prévoir un canal de retour de la dernière station locale vers la station centrale.

FIG. 2

La présente invention concerne d'une façon générale les réseaux de transmission de données numériques sur liaison physique, et concerne plus particulièrement un procédé de transfert de données numériques depuis une station centrale vers un ensemble de stations locales, et réciproquement, ainsi qu'un dispositif pour le transfert bidirectionnel simultané de données numériques entre au moins deux stations, permettant la mise en oeuvre du procédé.

L'invention s'applique en particulier, mais non exclusivement, à un réseau industriel de terrain, dans lequel la station centrale est un équipement de commande et de régulation d'un processus industriel, et les stations locales sont des capteurs et des actionneurs intervenant dans le processus industriel. Les stations possèdent des interfaces appropriées pour pouvoir échanger des données sur la ligne.

Dans la technique connue, l'accès au réseau s'effectue généralement sous le contrôle ou arbitrage de la station centrale. Lorsque la station centrale et une station locale désirent échanger des données, à l'initiative de l'une ou de l'autre, elles s'informent mutuellement par des protocoles de dialogue appropriés, puis une ou plusieurs trames sont émises sur la ligne pendant un intervalle de temps réservé. D'autres transferts de données peuvent se produire une fois que la ligne a été libérée.

Ainsi les liaisons entre la station centrale et les stations locales sont établies sur requêtes, au cas par cas.

Cela se traduit d'une part par une certaine lenteur des échanges, notamment si la liaison est encombrée et qu'il est nécessaire d'attendre sa libération, et d'autre part par une grande complexité dans la conception, tant matérielle que logicielle, des diverses interfaces avec le réseau.

Le premier objet de la présente est de pallier ces inconvénients de la technique antérieure et de proposer un procédé d'échange de données qui permette un échange de données simultanément dans les deux sens, d'une manière considérablement simplifiée et notamment sans faire appel à des protocoles complexes pour réaliser ces transferts.

A cet effet, la présente invention concerne tout d'abord un procédé de transfert de données numériques depuis une station centrale vers un ensemble de stations locales, et réciproquement, les stations locales étant prévues en succession sur une ligne en boucle partant de la station centrale et revenant vers celle-ci, caractérisé en ce qu'il comprend les étapes selon lesquelles :

- la station centrale émet sur la ligne une première sous-trame incluant un ensemble ordonné de données destinées aux stations locales, et

- chaque station locale recevant une sous-trame extrait de celle-ci la donnée qui lui est destinée, reconnue par sa position dans la trame, lui substitue une autre donnée destinée à la station centrale, et réémet la nouvelle sous-trame ainsi formée vers la station suivante sur la boucle,

- la dernière station locale réémettant ainsi vers la station centrale une dernière sous-trame incluant un ensemble ordonné de données provenant desdites stations locales.

La présente invention vise également à simplifier la liaison physique d'un réseau d'échange de données, permettant notamment la mise en oeuvre du procédé ci-dessus, en permettant notamment une liaison bidirectionnelle en full duplex sur une même paire de conducteurs blindés reliant deux stations quelconques.

A cet effet, la présente invention concerne également un dispositif pour le transfert bidirectionnel simultané de données numériques entre au moins deux stations par l'intermédiaire d'au moins un segment de ligne constitué par une paire de conducteurs blindés, caractérisé en ce que :

- à chaque extrémité de segment de ligne aboutissant à une station est associé un coupleur de ligne ;

- chaque coupleur de ligne comprend :

. deux bornes analogiques reliées aux deux conducteurs du segment associé, et une entrée logique et une sortie logique reliées à la station,

. un générateur électrique possédant une force électromotrice dont la valeur dépend de la valeur du signal présent sur son entrée logique et une résistance interne sensiblement égale à l'impédance caractéristique du segment de ligne associé, et

. des moyens pour comparer une valeur déterminée à partir de ladite force électromotrice et d'une mesure de la tension (u) entre ses deux bornes analogiques à au moins une valeur de seuil et pour délivrer sur sa sortie logique un signal dont la valeur, déterminée à partir du résultat de la comparaison, est égale au temps de propagation près à la valeur du signal présent sur l'entrée logique du coupleur de ligne situé à l'autre extrémité du segment de ligne associé;

. de telle sorte que le signal de sortie logique de chaque coupleur de ligne soit une reproduction du signal d'entrée logique du coupleur de ligne situé à l'extrémité opposée du segment.

Un tel dispositif est avantageux en ce qu'il permet par exemple la mise en oeuvre du procédé exposé plus haut sans nécessiter un montage en boucle de la ligne, les diverses stations étant simplement prévues les unes à la suite des autres, avec comme seule liaison physique un segment de ligne constitué par une paire de conducteurs blindés entre deux stations adjacentes.

D'autres aspects, buts et avantages de la présente invention apparaîtront mieux à la lecture de la description détaillée suivante de forme de réalisation préférée de celle-ci, donnée à titre d'exemple non limitatif et faite en référence aux dessins annexés, sur lesquels :

- la figure 1 est un schéma-bloc d'un réseau conforme à la présente invention, destiné à en expliquer le fonctionnement,

- la figure 2 est un schéma-bloc du réseau de la figure 1, illustrant en particulier une variante de liaison physique entre divers éléments du réseau,

- la figure 3 illustre schématiquement la structure interne d'une partie d'une station centrale reliée au réseau,

- la figure 4 illustre schématiquement la structure interne d'une partie d'une station locale reliée au réseau,

- la figure 5 illustre la liaison entre deux stations du réseau, et

- la figure 6 illustre cette même liaison, du point de vue électrique.

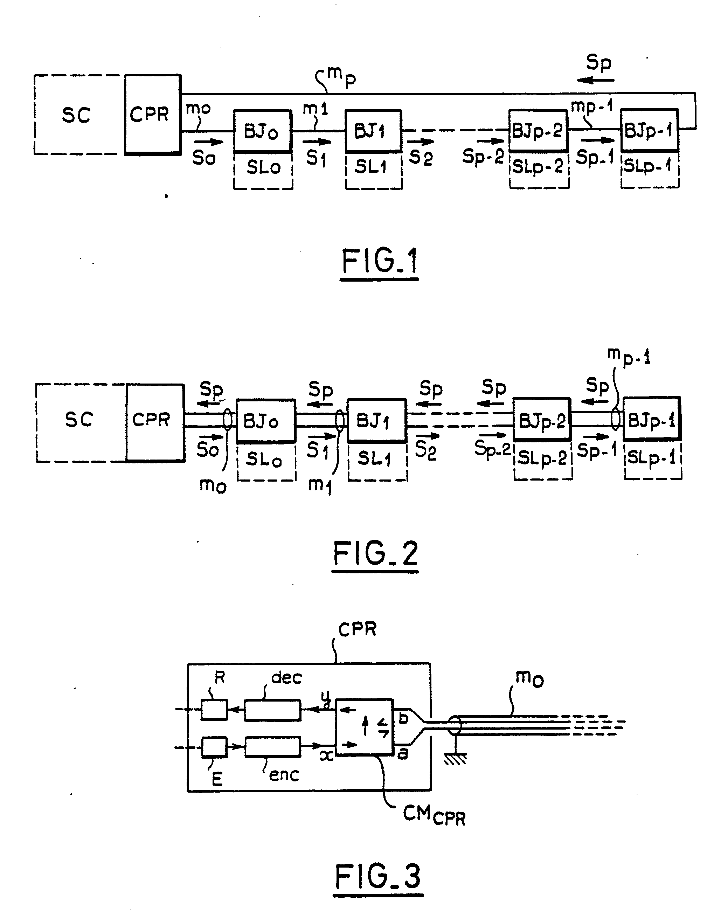

En référence tout d'abord à la figure 1, on va décrire l'invention en référence à un réseau industriel de terrain à bas coût. Sa fonction est en l'espèce de permettre l'échange de données, par exemple des mots de N bits (avec par exemple N = 16) entre une station centrale notée SC et un ensemble de P stations locales notées $SL_0$ à $SL_{P-1}$. Comme on le verra par la suite le nombre P est limité à une valeur maximale donnée. On considérera dans le présent exemple P≦64.

La station centrale et les stations locales communiquent ensemble par l'intermédiaire d'interfaces appropriées et d'une liaison physique.

Plus précisément, la station locale comporte un coupleur de réseau, noté CPR, tandis que chaque station locale comprend une boîte de jonction, respectivement $BJo$ à $BJ_{P-1}$.

On va supposer initialement, par souci de simplification, que les P boîtes de jonction sont montées en boucle sur une ligne ou liaison physique unidirectionnelle qui part du coupleur de réseau, traverse chacune des boîtes de jonction et retourne ensuite au coupleur de réseau. Dans l'exemple de la figure 1, on note $m_0$ à $m_P$ les P + 1 segments de ligne constituant la liaison.

A chaque boîte de jonction $BJ_K$, l'utilisateur attribue un identifieur $i_K$ compris entre 0 et 63, les identifieurs $i_0$ à $i_{P-1}$ étant tous différents deux à deux.

Au niveau du coupleur de réseau, on attribue à tout identifieur i deux variables dites centrales, chacune sous forme d'un mot de 16 bits, à savoir un mot émis, noté ei, et un mot reçu noté ri. Les deux groupes de 64 mots constituent matériellement deux mémoires, notées respectivement E et R, dans le coupleur de réseau CPR.

L'utilisateur (station centrale) peut écrire des données dans la mémoire E et lire des données dans la mémoire R.

Par ailleurs, au niveau de chaque boîte de jonction, on associe à l'identifieur i considéré deux variables dites locales, chacune sous forme d'un mot de 16 bits, à savoir un mot émis noté ɛi et un mot reçu noté ρi. Ces mots constituent matériellement deux registres situés dans la boîte de jonction considérée.

L'utilisateur de la boîte de jonction peut écrire le mot ɛi dans le registre associé et lire le mot ρi à partir du registre associé.

La fonction essentielle du réseau selon l'invention est pour tout identifieur i effectivement attribué à une boîte de jonction, de transférer ɛi dans ri et de transférer ei dans ρi, ce qui permet des échanges d'informations de la station centrale vers chaque station locale et réciproquement.

Conformément à un premier aspect essentiel de l'invention, les transferts d'informations ci-dessus s'effectuent par circulation de trames sur la boucle de la figure 1, dans un sens déterminé.

Chaque trame se décompose, suivant le segment de la liaison où l'on se place, en P + 1 sous-trames différentes, notées $S_0$ à $S_P$, correspondant respectivement aux segments $m_0$ à $m_P$.

Chaque sous-trame $S_K$, avec 0≦K≦P, véhicule une donnée numérique $D_K$ constituée par une suite ordonnée de 64 mots de 16 bits, notés d(0,K) à d(63,K).

Ces mots sont déterminés selon la règle générale suivante :

d(i,K) = ɛi si i appartient à l'ensemble {$i_0$, $i_1$,...,$i_{k-1}$ }, et

d(i,K) = ei si i n'appartient pas à ce même ensemble.

Ainsi, pour ce qui concerne les données émises par le coupleur de réseau, contenues dans la première sous-trame $S_0$, on a d(i,0) = ei quel que soit i.

De plus, pour ce qui concerne les données reçues par le coupleur de réseau, contenues dans la dernière trame $S_P$, on a :

d(i,P) = ei si i n'est attribué à aucune boîte de jonction, et

d(i,P) = ɛi si i est attribué à une boîte de jonction.

Enfin, pour une boîte de jonction $BJ_K$, qui reçoit la sous-trame $S_K$ et émet la sous-trame $S_{K+1}$, la donnée entrante d(i,K) et la donnée sortante d(i,K + 1) sont déterminées comme suit :

si i appartient à l'ensemble {$i_0$, $i_1$,...,$i_{k-1}$}, alors on a :

d(i,K) = d(i,K + 1) = ɛi;

si i = $i_K$, alors on a :

d(i,K) = ei et d(i,K + 1) = ɛi;

enfin si i n'appartient pas à l'ensemble {$i_0$, $i_1$,...,$i_K$}, alors on a :

d(i,K) = d(i,K + 1) = ei.

Il n'y a donc que dans le cas $i = i_K$ que le mot de rang i reçu par la boîte de jonction $BJ_K$ est différent du mot de même rang émis par cette même boîte.

Concrètement, le rôle de la boîte de jonction $BJ_K$ est donc de recevoir la sous-trame $S_K$, d'extraire le mot ei dont le rang dans la sous-trame reçue $S_K$ est déterminé par la valeur de l'identificateur $i_K$ considéré, de le mémoriser dans le registre correspondant, de former la nouvelle trame $S_{K+1}$ en remplaçant ei par $\epsilon i$, lu dans l'autre registre de la boîte, et d'émettre cette nouvelle trame.

Comme on va le voir en détail dans l'exemple illustratif suivant, on assure de cette manière, par circulation de la trame, l'ensemble des transferts de données de $\epsilon i$ vers ri et de ei vers $\rho i$, pour tous les i attribués à une boîte de jonction, et donc pour toutes les boîtes de jonction.

Exemple

On va décrire ci-dessus un exemple simplifié de fonctionnement du procédé de transfert de données selon la présente invention.

Choisissons tout d'abord égal à 8 le nombre de boîtes de jonction pouvant être connectées au réseau. Cela signifie que chaque sous-trame contient 8 mots de 16 bits.

Choisissons en outre P = 5, ce qui signifie que 5 boîtes de jonction BJ0 à BJ4 sont connectées au réseau, et sont reliées au coupleur de réseau par des segments de ligne notés respectivement m0 à M5.

Supposons en outre que les 5 boîtes de jonction possèdent les identifieurs suivants :

boîte BJ0 : $i_0 = 6$.
boîte BJ1 : $i_1 = 2$.
boîte BJ2 : $i_2 = 3$.
boîte BJ3 : $i_3 = 0$.
boîte BJ4 : $i_4 = 4$.

Dans le boîte BJ0, la donnée reçue e6 (donnée émise par le coupleur de réseau), contenue dans la sous-trame S0, est memorisée dans le registre correspondant $\rho$6, tandis que la donnée émise $\epsilon$6 est lue dans le registre de même nom et elle est substituée au mot e6 dans la sous-trame $S_0$, pour former la sous-trame S1.

De même, dans BJ1, le mot e2 de la sous-trame S1 est remplacé par le mot $\epsilon$2 pour former la sous-trame S2, et ainsi de suite.

Les six données D0 à D5 des six sous-trames S0 à S5 s'écrivent donc comme suit:

D0 = {e0,e1,e2,e3,e4,e5,e6,e7}
D1 = {e0,e1,$\epsilon$2,e3,e4,e5,e6,e7}
D2 = {e0,e1,$\epsilon$2,e3,e4,e5,$\epsilon$6,e7}
D3 = {e0,e1,$\epsilon$2,$\epsilon$3,e4,e5,$\epsilon$6,e7}
D4 = {$\epsilon$0,e1,$\epsilon$2,$\epsilon$3,e4,e5,$\epsilon$6,e7}

D5 = {$\epsilon$0,e1,$\epsilon$2,$\epsilon$3,$\epsilon$4,e5,$\epsilon$6,e7}

L'on comprend que, lors de la circulation d'une trame sur le réseau, on assure le transfert d'un mot du coupleur de réseau vers chacune des boîtes de jonction, ainsi que le transfert d'un autre mot de chaque boîte de jonction vers le coupleur de réseau, par substitution progressive de mots dans les données véhiculées par chacune des sous-trames.

On peut noter que, dans cet exemple, les mots e1, e5 et e7 sont présents mais restent inchangés. Ils démontrent la disponibilité du réseau pour y ajouter sans modification trois boîtes de jonction supplémentaires et assurer le transfert de mots entre celles-ci et le coupleur de réseau.

Un autre avantage du procédé d'échange de données selon l'invention réside en ce que, lors de la circulation de chaque trame dans le réseau, on assure simultanément le transfert d'une donnée de la station centrale vers chaque station locale et le transfert d'une autre donnée de chaque station locale vers la station centrale. Il en résulte qu'il n'est pas nécessaire de faire appel à des protocoles d'échange spéciaux, selon que la station locale est génératrice de données (station de type capteur) ou réceptrice de données (station de type actionneur), ou les deux.

L'organisation de la circulation des trames sur le réseau, dans son aspect temporel, se fera d'une manière simple, à une cadence régulière, sous le contrôle de la station centrale. De préférence, les sous-trames d'une même trame sont émises par chaque station en synchronisme, aux temps de propagation près. En outre, l'encodage ou modulation des informations numériques à véhiculer sur le réseau fera appel à des techniques classiques.

En référence maintenant aux figures 2 à 5, on va décrire une ligne préférée permettant de supporter le procédé d'échange de données tel que décrit ci-dessus.

La figure 2 montre un réseau dans lequel il n'existe pas de segment de retour $m_P$ à proprement parler.

En fait, chaque segment $m_K$ est bidirectionnel et permet d'une part la circulation de la sous-trame SK vers la boîte de jonction suivante, et d'autre part la circulation de la sous-trame finale SP en direction du coupleur de réseau.

Cela signifie que chaque boîte de jonction est capable d'une part de modifier la sous-trame reçue de la boîte de jonction précédente et d'envoyer la nouvelle sous-trame vers la boîte de jonction suivante, et d'autre part de transférer sans modification la sous-trame finale reçue de la boîte de jonction suivante vers la boîte de jonction précédente.

La liaison physique utilisée est une paire blindée de conducteurs, par exemple torsadés, dont l'impédance est notée Z et dont l'affaiblissement est noté A (en népers).

Les différents segments de ligne $m_0$ à $m_{P-1}$ sont connectés au coupleur de réseau CPR et aux diverses boîtes de jonction par des dispositifs appelés coupleurs de ligne, notés CM.

Sur les figures 3 à 5, on a représenté les coupleurs de ligne par des schémas conventionnels dans lesquels :

x désigne une borne d'entrée logique à deux états,

y désigne une borne d'écho logique à deux états,

a et b désignent deux bornes analogiques, destinées à la connexion avec la ligne.

Vu des bornes analogiques a et b, un coupleur de ligne se comporte comme un générateur électrique, caractérisé par sa force électromotrice e et son impédance interne R.

La force électromotrice dépend du signal logique d'entrée x selon la loi :

e = -E si x est un "0",

e = +E si x est un "1",        (1)

E étant une tension de référence fixe, par exemple de l'ordre de 2,5 volts.

En outre, pour chacun des coupleurs de ligne, R est choisie égale à Z.

Le signal d'écho logique y dépend, comme on va le voir plus loin, à la fois du signal d'entrée logique x et de la tension de sortie analogique u (entre les bornes a et b) du coupleur de ligne.

La loi de dépendance est fixée de la façon suivante :

y = "1" si $(2u-e) > +\mu E$,

y = "0" si $(2u-e) < -\mu E$.        (2)

$\mu$ est choisi égal à 0,25.

Les signaux logiques x et y sont séparés galvaniquement des bornes analogiques a et b, par tout moyen approprié tel que transformateur ou opto-coupleur.

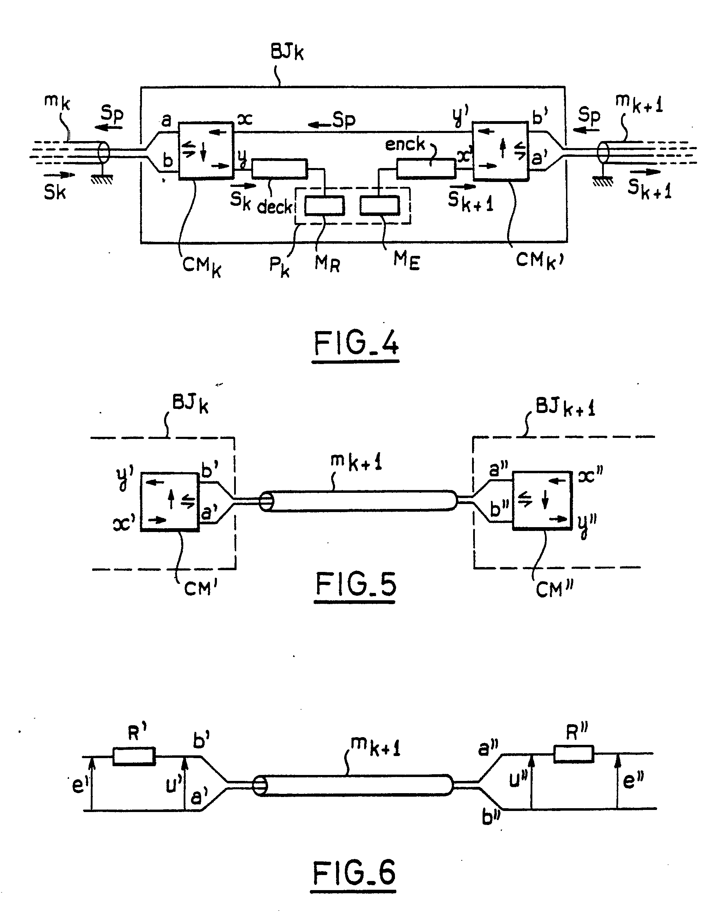

La figure 5 illustre la liaison par un segment de ligne $m_{K+1}$ entre deux coupleurs de ligne, respectivement CM' et CM", appartenant respectivement aux boîtes de jonction $BJ_K$ et $BJ_{K+1}$. Ces coupleurs de ligne ont respectivement des bornes x',y',a',b' et x",y",a",b".

On va démontrer plus loin qu'aux temps de propagation dans le segment près, les dispositions ci-dessus permettent d'assurer que

y' = x" (canal "aller" du segment) et

y" = x' (canal "retour" du segment),

c'est-à-dire que la paire torsadée blindée tient lieu de liaison bidirectionnelle en full-duplex pour la circulation des trames sur le réseau, par exemple selon le mode tel que décrit en référence à la figure 2.

Par ailleurs, pour un coupleur de ligne dont les bornes analogiques ne sont pas connectées, on a dans ce coupleur u = e, soit 2u-e = e, avec e variant selon x comme l'indique la relation (1) ci-dessus. Et l'on déduit de la relation (2) que, dans ce cas, on a y = x. Le coupleur agit ainsi, vu des bornes logiques, comme un miroir parfait.

La figure 3 illustre schématiquement la structure interne du coupleur de réseau CPR. Il contient un seul coupleur de ligne $CM_{CPR}$ dont les bornes analogiques a et b sont reliées à la paire de conducteurs du segment $m_0$. L'entrée logique x est reliée à la mémoire E de trame émise, mentionnée plus haut, par l'intermédiaire d'un encodeur enc, tandis que la sortie logique y est reliée à la mémoire R de trame re'ue par l'intermédiaire d'un décodeur dec. La station centrale SC (figure 2) accède comme elle le souhaite aux mémoires E et R, respectivement en écriture et en lecture.

La figure 4 représente schématiquement la structure interne d'une boîte de jonction $BJ_K$.

Elle comprend deux coupleurs de ligne $CM_K$ et $CM_K'$, ayant respectivement des bornes a,b,x,y et a',b',x',y'.

Les bornes a,b du premier coupleur $CM_K$ sont reliées aux deux conducteurs du segment $m_K$, tandis que les bornes a',b' du second coupleur $CM_K'$ sont reliées aux deux conducteurs du segment suivant $m_{K+1}$.

Les bornes y' et x sont reliées ensemble. La sortie logique y est reliée à un processeur $P_K$, contenant les registres de mot recu et les registres de mot émis, respectivement $M_R$ et $M_E$, via un décodeur noté decK, tandis que le processeur est relié à l'entrée logique x' via un encodeur noté encK.

Le processeur $P_K$ est chargé d'extraire de la donnée $D_K$ véhiculée par la sous-trame $S_K$ la donnée ei considérée, d'écrire cette donnée dans $M_R$, de lire la donnée $\epsilon i$ à émettre dans $M_E$, et de remplacer ei par $\epsilon i$ dans la donnée $D_K$, ce qui forme la donnée $\overline{D}_{K+1}$ correspondant à la sous-trame suivante $S_{K+1}$.

On peut noter ici que pour la dernière boîte de jonction $BJ_{P-1}$, les bornes a' et b' ne sont pas connectées. Le coupleur $CM_{P-1}'$ recevant la sous-trame SP sur son entrée x' va délivrer cette même sous-trame sur sa sortie y', et la sous-trame SP va ainsi être véhiculée en retour vers le coupleur de réseau via le coupleur de réseau $CM_{P-1}$, le segment $m_{P-1}$ et les autres boîtes de jonction et segments (voir figure 2), pour finalement atteindre le coupleur de ligne situé dans le coupleur de réseau CPR.

Dans toute la description qui précède, on a supposé que les signaux analogiques véhiculés sur la paire blindée de chaque segment de ligne pouvaient circuler dans les deux sens, en full-duplex.

On va décrire ci-dessous la façon dont cette circulation bidirectionnelle des données s'effectue, en se référant à la figure 6, qui correspond à l'illustration par blocs de la figure 5.

Sur cette figure, deux coupleurs de ligne CM' et CM" appartenant par exemple à deux boîtes de jonction adjacentes sont modélisés par des générateurs (e$'$,R$'$) et (e$''$,R$''$) comme décrit plus haut.

Plus précisément, on pose :

e$'$(t) et e$''$(t) les forces électromotrices des deux générateurs,

R$'$ et R$''$ les résistances internes des deux générateurs,

u$'$(t) et u$''$(t) les tensions de sortie (entre a et b et a$'$ et b$'$, respectivement) des deux générateurs.

A l'affaiblissement de la ligne (segment m$_K$).

On suppose que les deux générateurs ont même tension de référence E.

Si l'on se place du point de vue du coupleur de ligne CM$'$, la tension e$'$(t) est connue, car "fabriquée" en fonction de la valeur logique x$'$. De même, u$'$(t) peut être connu par une mesure de tension appropriée dans le coupleur de ligne CM$'$.

Or, d'après la théorie des lignes, en supposant que la résistance interne R$'$ est strictement égale à l'impédance Z de la ligne, on a :

$$u'(t) = \tfrac{1}{2} [e'(t) + e^{-A}.e''(t-\tau)] \qquad (3)$$

A étant l'affaiblissement en Népers et $\tau$ étant le temps de propagation dans la ligne.

L'on en déduit :

$$e''(t-\tau) = e^{A}.[2u'(t) - e'(t)]$$

Ainsi, en première approximation, il est possible de déterminer, à partir de la seule connaissance de e$'$ et de u$'$ et des caractéristiques de la ligne, la force électromotrice du générateur constitué par le coupleur de ligne situé à l'autre bout.

En pratique, pour tenir compte de l'affaiblissement dans la ligne, pour faire face aux écarts réels entre résistance interne et impédance de ligne, et à d'éventuels écarts entre les tensions de référence E des générateurs, ainsi que pour assurer une immunité au bruit convenable, on a introduit le coefficient $\mu$ dans la loi de dépendance (2) telle qu'exposée plus haut, qui permet la reconstitution sur la sortie logique considérée de l'état de l'entrée logique du coupleur de ligne distant.

Ainsi, en référence maintenant à la figure 5, l'entrée logique x$''$ du coupleur de ligne CM$''$ détermine la valeur de la force électromotrice e$''$ du générateur de modélisation, d'après la loi (1) exposée plus haut; ensuite, par comparaison de la différence de tensions 2u$''$ - e$''$ dans le coupleur de ligne CM$'$ avec les valeurs de seuil -$\mu$E et +$\mu$E (loi (2)), on reproduit sur la sortie logique y$'$ la valeur binaire prise par x$''$, au temps de propagation près.

Par le processus symétrique, on reproduit au niveau de la sortie logique y$''$ de CM$''$ la valeur binaire prise par x$'$, au temps de propagation près.

Ainsi, par un choix approprié des divers paramètres entrant en jeu (résistance interne, coefficient $\mu$, etc...) on assure par une simple paire torsadée blindée une liaison bidirectionnelle entre deux boîtes de jonction successives.

En outre, comme on l'a vu plus haut, la boîte de jonction située à l'extrémité de la ligne opposée au coupleur de réseau tient lieu de miroir pour les signaux de la ligne, sans qu'il soit nécessaire d'y apporter une quelconque modification physique.

Il en résulte l'avantage appréciable selon lequel, pour ajouter au réseau une station locale, il suffit de rajouter au bout de la chaîne existante un autre segment de ligne et la boîte de jonction correspondante.

Bien entendu, la présente invention n'est nullement limitée à la forme de réalisation décrite ci-dessus et représentée sur les dessins, mais l'homme de l'art saura y apporter toute variante ou modification conforme à son esprit.

## Revendications

1. Procédé de transfert de données numériques depuis une station centrale (SC) vers un ensemble de stations locales (SL$_K$), et réciproquement, les stations locales étant prévues en succession sur une ligne en boucle (m$_0$-m$_P$; m$_0$-m$_{P-1}$) partant de la station centrale et revenant vers celle-ci, caractérisé en ce qu'il comprend les étapes selon lesquelles :

- la station centrale émet sur la ligne une première sous-trame (S$_0$) incluant un ensemble ordonné de données (ei) destinées aux stations locales, et

- chaque station locale (SL$_K$) recevant une sous-trame (S$_K$) extrait de celle-ci la donnée qui lui est destinée, reconnue par sa position dans la trame, lui substitue une autre donnée ($\epsilon$i) destinée à la station centrale, et réémet la nouvelle sous-trame (S$_{K+1}$) ainsi formée vers la station suivante (SL$_{K+1}$) sur la boucle,

- la dernière station locale (SL$_{P-1}$) réémettant ainsi vers la station centrale une dernière sous-trame (S$_P$) incluant un ensemble ordonné de données provenant desdites stations locales.

2. Procédé selon la revendication 1, caractérisé en ce qu'à chaque station locale (SL$_K$) est associé un identifieur (i$_K$) qui détermine la position dans la sous-trame reçue (S$_K$) de la donnée à extraire et à soumettre à substitution.

3. Procédé selon la revendication 2, caractérisé en ce que chaque sous-trame (S$_K$) comprend un nombre déterminé et invariable de données (d(i,K)) et en ce que les stations locales sont prévues en un nombre (P) égal ou inférieur audit nombre déterminé.

4. Procédé selon l'une des revendications précédentes, caractérisé en ce que la ligne en boucle est constituée par un ensemble de liaisons bidirectionnelles simultanées (m$_0$-m$_{P-1}$) entre les stations successives et en ce que la dernière station locale (SL$_{P-1}$) réémet la dernière sous-trame (S$_P$) à destination de la station centrale en passant à nouveau, en sens inverse, par l'ensemble des stations locales précédentes ($SL_{P-2}$-$SL_0$).

5. Dispositif pour le transfert bidirectionnel simultané de données numériques entre au moins deux stations par l'intermédiaire d'au moins un segment de ligne constitué par une paire de conducteurs blindés, caractérisé en ce que :
- à chaque extrémité de segment de ligne aboutissant à une station est associé un coupleur de ligne (CM);
- chaque coupleur de ligne comprend :
. deux bornes analogiques (a,b) reliées aux deux conducteurs du segment associé, et une entrée logique (x) et une sortie logique (y) reliées à la station,
. un générateur électrique possédant une force électromotrice (e) dont la valeur dépend de la valeur du signal présent sur son entrée logique (x) et une résistance interne (R) sensiblement égale à l'impédance caractéristique (Z) du segment de ligne associé, et
. des moyens pour comparer une valeur déterminée à partir de ladite force électromotrice (e) et d'une mesure de la tension (u) entre ses deux bornes analogiques à au moins une valeur de seuil (-$\mu E$, +$\mu E$) et pour délivrer sur sa sortie logique (y) un signal dont la valeur, déterminée à partir du résultat de la comparaison, est égale au temps de propagation près à la valeur du signal présent sur l'entrée logique du coupleur de ligne situé à l'autre extrémité du segment de ligne associé;
de telle sorte que le signal de sortie logique (y) de chaque coupleur de ligne soit une reproduction du signal d'entrée logique (x) du coupleur de ligne situé à l'extrémité opposée du segment.

6. Dispositif selon la revendication 5, caractérisé en ce que les entrée et sortie logiques sont à deux états ("0","1") et en ce que la valeur de la force électromotrice (e) de chaque générateur est déterminée par la loi suivante :
e = -E si x reçoit un "0",
e = +E si x reçoit un "1",
E étant une tension de référence fixe.

7. Dispositif selon la revendication 6, caractérisé en ce que les moyens de comparaison obéissent à la loi suivante :
y délivre un "1" si (2u-e) > +$\mu E$,
y délivre un "0" si (2u-e) < -$\mu E$,
$\mu$ étant un coefficient inférieur à 1.

8. Dispositif selon la revendication 7, caractérisé en ce que le coefficient $\mu$ est choisi égal à environ 0,25.

9. Dispositif selon l'une des revendications 5 à 8, pour le transfert de données entre une station centrale (SC) et un ensemble de stations locales ($SL_K$) en succession, caractérisé en ce qu'il comprend un coupleur de ligne unique ($CM_{CPR}$) prévu dans station centrale, deux coupleurs de ligne ($CM_K$,$CM_K'$) prévus dans chaque station locale, et un ensemble de segments de ligne ($m_K$) en un nombre (P) égal au nombre de stations locales, les segments de ligne étant prévus respectivement entre deux stations adjacentes.

10. Dispositif selon la revendication 9, caractérisé en ce que dans chaque station locale ($SL_K$), l'entrée logique (x) d'un premier coupleur de ligne ($CM_K$) est reliée directement à la sortie logique (y') d'un second coupleur de ligne ($CM_K'$), et en ce que la sortie logique (y) du premier coupleur de ligne et l'entrée logique (x') du second coupleur de ligne sont reliées à une unité de traitement ($P_K$) de la station locale, capable de recevoir des informations ($D_K$) de ladite sortie logique (y) du premier coupleur de ligne, de prélever une donnée déterminée ($e_i$) provenant de la station centrale parmi lesdites informations, de remplacer ladite donnée déterminée par une autre donnée ($\epsilon_i$) destinée à ladite station centrale, et d'appliquer les informations ainsi modifiées ($D_{K+1}$) à ladite entrée logique (x') du second coupleur de ligne.

11. Dispositif selon la revendication 10, caractérisé en ce que l'entrée et la sortie logiques (x,y) du coupleur de ligne ($CMC_{CPR}$) situé dans la station centrale sont reliées à une mémoire de lecture (E) et une mémoire d'écriture (R), respectivement, par l'intermédiaire de moyens de encodage-décodage (enc,dec).

FIG.1

FIG.2

FIG.3

FIG.4

FIG.5

FIG.6